# EUROPÄISCHE PATENTSCHRIFT

(11) **EP 1 854 345 B1**
(45) Veröffentlichungstag und Bekanntmachung des Hinweises auf die Patenterteilung: **10.12.2008**
(21) Anmeldenummer: 07008245.8
(22) Anmeldetag: 23.04.2007
(51) Int. Cl.: A01D 69/03

(54) **Kühlsystem für hydraulische Antriebe an Erntemaschinen**
Cooling system for hydraulic transmissions on harvesters
Système de refroidissement pour commandes hydrauliques sur des moissonneuses

(30) Priorität: 12.05.2006 DE 202006007649 U
(43) Veröffentlichungstag der Anmeldung: 14.11.2007
(73) Patentinhaber: FELLA-Werke GmbH, 90533 Feucht (DE)
(72) Erfinder: Kohl, Bernhard, 90537 Feucht (DE); Breitenbach, Patric, 97799 Detter (DE); Pürrer, Josef, 90537 Feucht (DE)
(74) Vertreter: Grünecker, Kinkeldey, Stockmair & Schwanhäusser Anwaltssozietät

(56) Entgegenhaltungen:
- US-A- 3 469 381
- US-A- 3 729 910
- US-A- 3 751 191
- US-A- 4 308 713

## Beschreibung

Die Erfindung betrifft ein Kühlsystem für einen hydraulischen Antrieb in einer landwirtschaftlichen Erntemaschine gemäß dem Oberbegriff des Anspruchs 1 sowie eine Erntemaschine mit einem solchen hydraulischen Antrieb (siehe z.B. US-A-4 308 713).

Landwirtschaftliche Erntemaschinen, wie z.B. ein Mähwerk, werden in zunehmendem Maß mit Zusatzausrüstungen zur Behandlung bzw. zur Weiterförderung des Erntegutes ausgerüstet. Für den Antrieb der Arbeitsorgane dieser Zusatzausrichtungen, wie beispielsweise Förderbänder, Fördertrommeln etc. werden meistens hydrostatische Antriebe verwendet, da diese Antriebe räumlich leichter unterzubringen sind und mit diesen das Aus- und Einschalten, sowie ein eventuell notwendiges Regeln der Antriebsdrehzahl einfach zu lösen ist.

Besonders wenn höhere Antriebsleistungen benötigt werden, ist es erforderlich, die in der hydraulischen Flüssigkeit entstehende Wärmeenergie abzuführen. Dazu werden üblicherweise Wärmetauscher, wie z.B. Ölkühler und Kühlgebläse verwendet. Diese sind jedoch empfindlich gegen Verschmutzung, so dass zusätzlich Kühlluftfilter erforderlich sind, welche regelmäßig gereinigt werden müssen.

Hiervon ausgehend liegt der vorliegenden Erfindung die Aufgabe zu Grunde, ein einfaches und wartungsfreies Kühlsystem für die hydraulische Flüssigkeit des hydraulischen Antriebs zu schaffen.

Erfindungsgemäß wird diese Aufgabe durch die Merkmale des Anspruchs 1 gelöst.

Gemäß der vorliegenden Erfindung wird die Wärmeenergie der hydraulischen Flüssigkeit an den Emtegutstrom abgegeben. Durch die erfindungsgemäße Anordnung entsteht ein praxistaugliches, einfaches, sehr wirksames und wartungsfreies Kühlsystem. Durch die an den Erntestrom, d.h. beispielsweise frisch gemähtes Futter, abgegebene Wärmeenergie wird darüber hinaus der Trocknungsvorgang beschleunigt. Somit kann die von der hydraulischen Flüssigkeit abgeführte Wärmeenergie wirksam genutzt werden.

Gemäß einer bevorzugten Ausführungsform umfasst der Wärmetauscher mindestens ein Bauteil der Erntemaschine, das mit dem Erntegutstrom in Berührung kommt. Dadurch, dass die Bauteile der Maschine, welche mit dem Erntegutstrom in Berührung kommen als Wärmetauscher ausgebildet werden, sind keine zusätzlichen Teile notwendig, so dass Gewicht und Größe der Erntemaschine klein gehalten werden können. Die erfindungsgemäße Anordnung erlaubt somit eine kostengünstige Realisierung des Wärmetauschers, da vorhandene Komponenten verwendet werden können.

Gemäß einer bevorzugten Ausführungsform umfasst der Wärmetauscher mindestens eine der einen Förderkanal für den Emtegutstrom bildenden Wände, die zumindest teilweise als Hohlkörper ausgebildet ist, durch die zu kühlende hydraulische Flüssigkeit fließt. Die Wände des Förderkanals kommen besonders intensiv und großflächig mit dem Erntegutstrom in Verbindung, so dass die Wärmeenergie der hydraulischen Flüssigkeit mit hohem Wirkungsgrad an das Erntegut abgeführt werden kann. Dabei kann die mindestens eine Wand entweder als ganzer Hohlkörper ausgebildet sein oder zumindest teilweise als Hohlkörper ausgebildet sein, d.h. entsprechende Hohlräume umfassen, durch die die zu kühlende hydraulische Flüssigkeit fließt.

Es ist jedoch auch möglich, dass der Wärmetauscher Kühlrohre umfasst, durch die die zu kühlende Hydraulikflüssigkeit fließt, wobei die Kühlrohre an mindestens einer der einen Förderkanal für den Emtegutstrom bildenden Wände wärmeleitend befestigt sind. Da die Kühlröhre wärmeleitend mit der mindestens einen Wand verbunden sind, kann die Wärmeenergie über die gesamte Wand an das Erntegut weitergegeben werden.

Es ist vorteilhaft, wenn der Wärmetauscher in eine nur mit geringem Druck beaufschlagte Rücklaufleitung eines Hydraulikkreislaufs des hydraulischen Antriebs eingeschaltet ist. Bei dieser Anordnung kann die hydraulische Flüssigkeit bereits beim Rücklauf in den Öltank gekühlt werden. Somit kann Rohrleitungsmaterial gespart und der Aufbau vereinfacht werden.

Gemäß einer bevorzugten Ausführungsform der vorliegenden Erfindung umfasst der Wärmetauscher eine Rückwand einer Querfördereinrichtung. Es ist jedoch auch möglich, dass der Wärmetauscher eine Auswurfhaube eines Aufbereiters umfasst.

Die vorliegende Erfindung wird nachfolgend unter Bezugnahme der folgenden Figuren näher beschrieben.
- Fig. 1: zeigt eine erfindungsgemäße Erntemaschine in perspektivischer Darstellung.
- Fig. 2a: zeigt einen Querschnitt durch einen Teil der in Fig. 1 dargestellten Erntemaschine.
- Fig. 2b: zeigt eine Vergrößerung des Ausschnitts A in Fig. 2a.
- Fig. 3a: zeigt einen Querschnitt durch einen Teil der in Fig. 1 gezeigten Erntemaschine nach einem weiteren Ausführungsbeispiel der vorliegenden Erfindung.
- Fig. 3b: zeigt eine Vergrößerung des Ausschnitts B, der in Fig. 3a gezeigt ist.
- Fig. 4b: zeigt eine weitere Ausführungsform eines Kühlsystems gemäß der vorliegenden Erfindung.
- Fig. 5: zeigt schematisch einen Hydraulikplan für die in Zusammenhang mit den Fig. 1 bis 4 gezeigten Ausführungsformen.

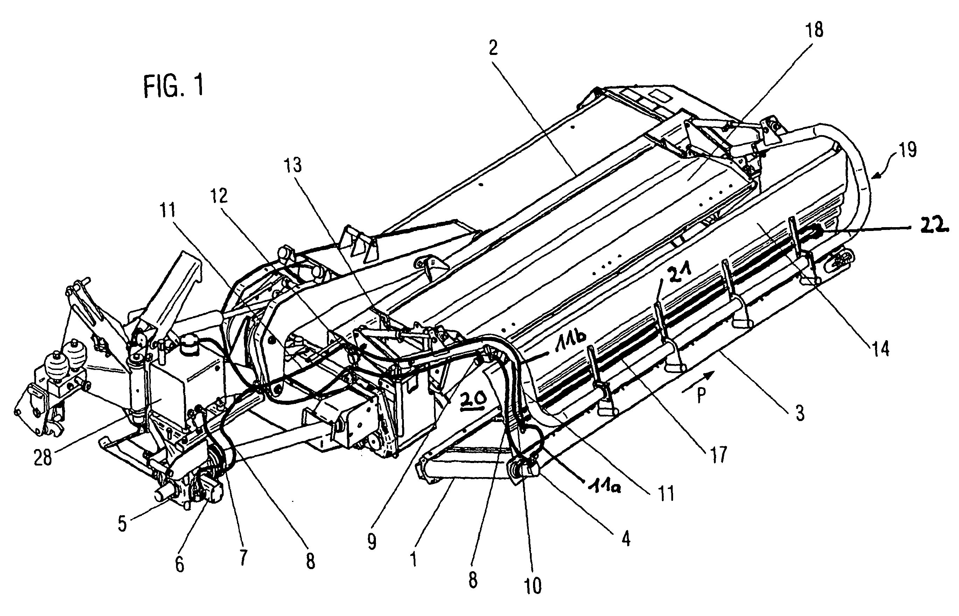

Fig. 1 zeigt in perspektivischer Darstellung ein Ausführungsbeispiel der vorliegenden Erfindung an einem Scheibenmähwerk 2 mit Aufbereiterrotor 15 und Querförderband 3 zur Zusammenführung von Mähschwaden.

Das Förderband 1 des hinter dem Mähwerk 2 angebauten Querförderers 3 wird über den hydraulischen Antrieb 4, hier den Hydromotor 4 angetrieben. Der Querförderer 3 fördert durch das angetrieben Förderband 1 die frisch gemähte Ernte, die von dem Mähwerk über einen Aufbereiterrotor 15 angeschleudert wird in Querrichtung P zur Arbeitsrichtung der Erntemaschine. Die Versorgung des Hydromotors 4 mit hydraulischer Flüssigkeit, hier mit Drucköl erfolgt von einer am Winkelgetriebe 5 angeflanschten Hydropumpe 6. Das Hydrauliköl wird über die Saugleitung 7 aus dem Tank 28 von der Hydropumpe 6 angesaugt. In die Druckleitung 8 zwischen Hydropumpe 6 und Hydromotor 4 ist ein Stromregelventil 9 eingebaut, mit welchem bei Bedarf ein einstellbarer Teil des Ölstroms abgezweigt wird und über die Verbindungsleitung 10 in die Rücklaufleitung 11 abfließen kann. Dadurch kann die Drehzahl des Hydromotors 4 geregelt und damit die Wurfweite des Förderbandes variiert werden.

Zusätzlich können die Druckleitung 8 und die Rücklaufleitung 11 über das bei Normalbetrieb des Förderbandes geschlossene Sperrventil 12 verbunden werden. Dadurch wird der Ölstrom kurzgeschlossen und der Antrieb des Förderbandes 1 ausgeschaltet. Die Betätigung des Sperrventils 12 ist mechanisch so mit der Aushebung 13 des Querförderers verbunden, dass beim Ausheben in die Außerbetriebsstellung der Ölstrom kurzgeschlossen und somit das Förderband 1 nicht mehr angetrieben wird.

Gemäß der vorliegenden Erfindung ist ein Wärmetauscher 19 vorgesehen, der Wärmeenergie der zu kühlenden hydraulischen Flüssigkeit hier des Öls an einen Erntegutstrom der Erntemaschine abgibt.

Gemäß dem in Fig. 1 gezeigten Ausführungsbeispiel ist der Wärmetauscher 19 in die Rücklaufleitung 11 eingebaut, um die im Hydrauliköl entstehende Wärme an das vorbeiströmende Erntegut abzugeben. Die Rückwand 14 die an dem Querförderer 3 angebracht ist begrenzt einen Förderkanal 20 für den Erntegutstrom. In diesem Ausführungsbeispiel ist die Rückwand 14, an welcher das Erntegut durch den Aufbereiterrotor 15 angeschleudert wird und an der Erntegut entlang läuft als Wärmetauscher ausgebildet. Das bedeutet, dass die hydraulische Flüssigkeit hier das Hydrauliköl in Strömungsrichtung nach dem Hydromotor 4 an oder durch die Rückwand 14 geleitet wird, bevor sie erneut in den Tank 28 rückgeführt wird.

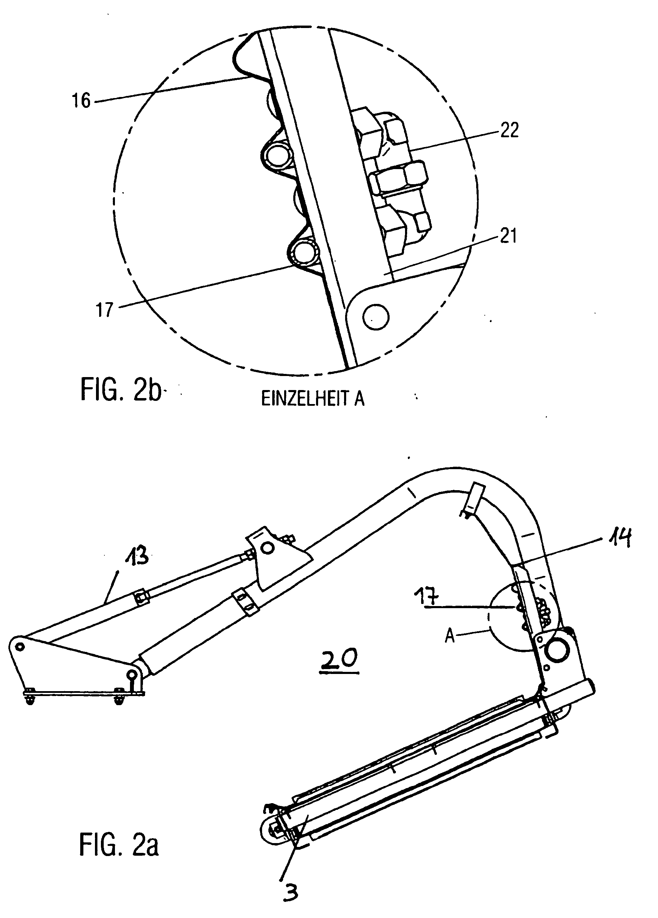

Fig. 2a zeigt einen Schnitt durch einen Teil der in Fig. 1 gezeigten Erntemaschine. In Fig. 2a ist die Aushebung 13 zum Ausheben des Querförderers 3 aus seiner Arbeitsposition in eine erhöhnte Position zu erkennen sowie der Förderkanal 20, durch den der Erntestrom gefördert wird. Entlang der Rückwand 14 verlaufen Kühlrohre 17, die wärmeleitend an der Wand 14 vorgesehen sind.

Fig. 2b zeigt eine Vergrößerung des Ausschnitts A. Hier ist die Rückwand 14 mit Sicken 16 versehen, in welchen die Kühlrohre 17 verlegt sind. Die Größe der Sicken 16 und der Kühlrohre 17 ist so gewählt, dass die Kühlrohre in die Sicken eingepasst sind, damit eine möglichst große Berührungsfläche zwischen Sicke 16 und Kühlrohr 17 gegeben ist. Die mit Sicken 16 versehene Rückwand 14 kann nach hinten offen sein, wobei dann wie in Fig. 1 gezeigt ist, die Kühlrohre 17 über Halterungen 21 an der Wand bzw. in den Sicken 16 gehalten werden können. Wie in Zusammenhang mit Fig. 1 und 2b deutlich wird, läuft das Hydrauliköl nach dem Hydromotor 4 über die Rückleitung 11a in die Leitung 17, die im wärmeleitenden Kontakt mit der Rückwand 14 steht. Die hydaulische Flüssigkeit strömt von einem Ende der Rückwand14 in Richtung P bis zum gegenüberliegenden Ende der Rückwand 14 und wird über ein U-Stück umgelenkt, durchläuft wiederum die Rückwand 14 und strömt dann über den Leitungsabschnitt 11 b zurück zum Tank 28. In Fig. 1 ist gezeigt, dass die Kühlrohre 17 derart verlegt sind, dass das Öl die Rückwand 14 in Längsrichtung einmal hin und zurück durchströmt. Die Erfindung ist jedoch nicht auf diese Ausführungsform beschränkt, so dass auch längere Kühlrohre 17 vorgesehen sein können, die mehrfach hin und zurück in Richtung P oder meanderförmig oder aber in einem anderen Muster verlaufen.

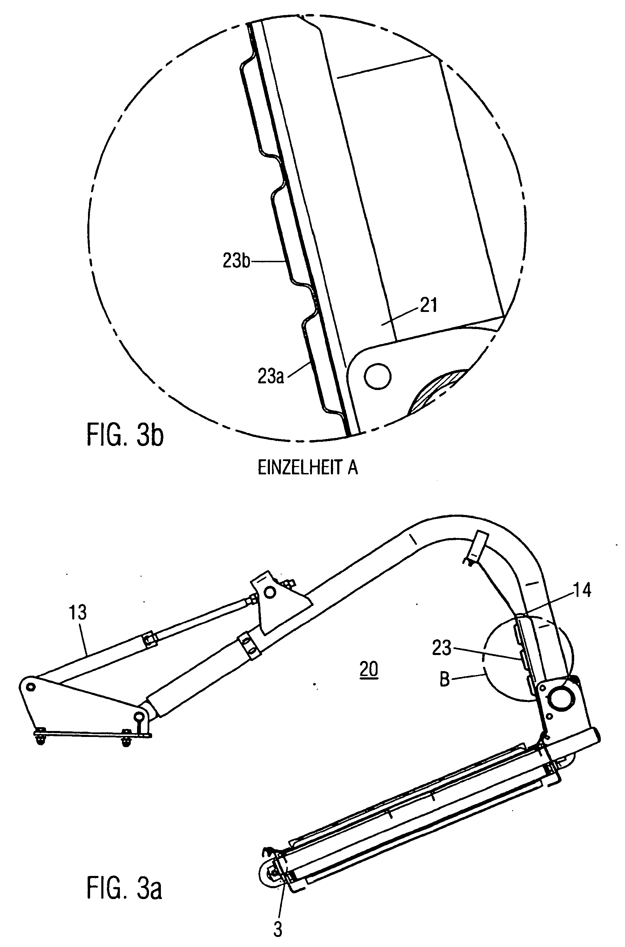

Fig. 3a und 3b zeigen eine weitere Ausführungsform der vorliegenden Erfindung, wobei wie in den Fig. 2a und 2b auch die Rückwand 14 als Wärmetauscher 19 ausgebildet ist. Hier wird, wie insbesondere aus Fig. 3b hervorgeht, die Rückwand 14 zumindest teilweise als flacher Hohlkörper 21 ausgebildet, wobei das rücklaufende Hydrauliköl die Hohlkörper 21, die in direktem Kontakt mit dem Erntegutstrom im Förderkanal 20 stehen, durchströmt.

Durch die Hohlkörper 21 bzw. Kanäle 21 kann das Hydrauliköl die Rückwand 14 mehrfach durchströmen, so dass in dem Hydrauliköl gespeicherte Wärmeenergie an den Erntegutstrom abgegeben werden kann. Wie auch im Zusammenhang mit den Fig. 2b und 2a beschrieben, kann dann das Hydrauliköl, das die Rückwand 14 durchströmt hat, über den Leitungsabschnitt 11b erneut den Tank 28 zugeführt werden.

Wie aus Fig. 3b hervorgeht, kann das Hydrauliköl beispielsweise durch einen Hohlkörper bzw. Kanal 20a, der sich in Pfeilrichtung P durch die Wand 14 erstreckt, geführt werden und am Ende der Rückwand 14 umgelenkt werden, um in entgegengesetzter Richtung durch den Kanal 23b geleitet zu werden. Es können auch mehrere Hin- und Rückkanäle 23a, 23b vorgesehen sein. Die Rückwand könnte auch vollständig als Hohlkörper ausgebildet sein.

In den Ausführungsbeispielen, die in Fig. 1 bis 3 erläutert wurden, wurde die Rückwand 14 als Wärmetauscher ausgebildet, um die in der hydraulischen Flüssigkeit gespeicherte Wärmeenergie an den Emtegutstrom abzuführen. Je nach Bauart des Querförderers kann jedoch auch eine andere einen Förderkanal für den Erntegutstrom bildende Wand zusätzlich oder alternativ als Wärmetauscher ausgebildet werden, solange diese in Kontakt mit dem Erntegutstrom kommt.

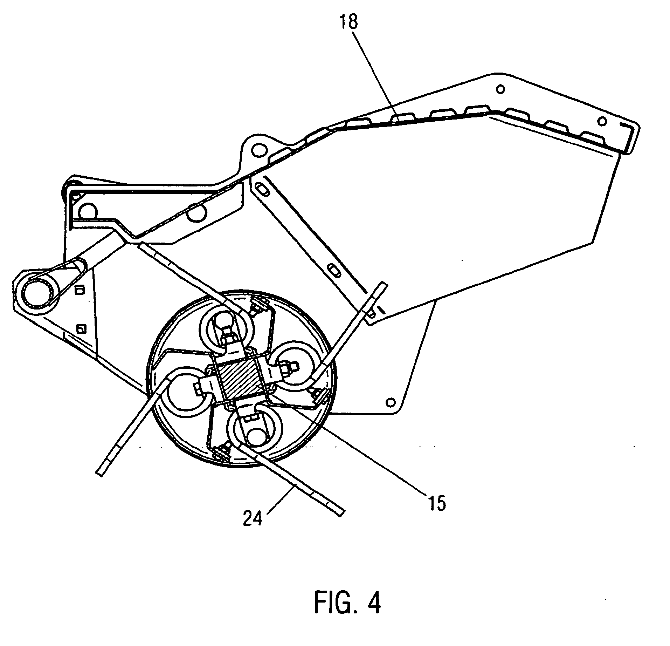

Fig. 4 zeigt eine weitere Ausführungsform der vorliegenden Erfindung, wie aus Fig. 4 ersichtlich ist, weist der Aufbereiter 15, der mit seinen Armen 24 vom Mähwerk 2 geschnittenes Erntegut auf das Förderband 1 schleudert, eine Auswurfhaube 18 auf. Die Auswurfhaube 18 begrenzt den Förderkanal 20 nach oben, derart, dass angeschleuderte Mähschwaden nicht nach oben weggeschleudert werden, sondern sicher auf dem Förderband 1 zu liegen kommen. Auch die Auswurfhaube 18 kann ganz oder teilweise als Wärmetauscher ausgebildet werden, so wie im Zusammenhang mit Fig. 2 und 3 beschrieben wurde. In Fig.4 ist die Auswurfhaube zumindest teilweise als Hohlkörper ausgebildet ist, wobei durch den Hohlkörper oder die dadurch entstehenden Kanäle 23 Hydraulikflüssigkeit fließt.

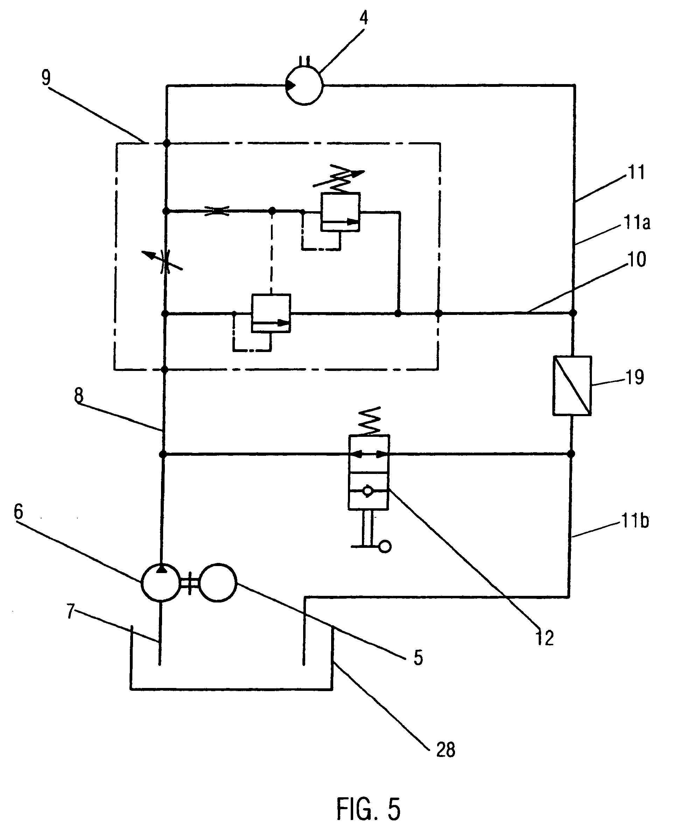

Fig. 5 zeigt einen Hydraulikplan für die in Fig. 1 bis 4 gezeigten Ausführungsformen.

Die hydraulische Flüssigkeit, hier das Hydrauliköl, wird in dem Tank 28 gespeichert. Die Hydropumpe 6 ist über die Saugleitung 7 mit dem Tank 28 verbunden. In der Druckleitung 8 ist das Stromregelventil 9 angeordnet, um den Strom der hydraulischen Flüssigkeit, hier des Hydrauliköls, einzustellen, um die Drehzahl des Hydromotors 4 zu regeln. Dazu wird eine bestimmte Menge der hydraulischen Flüssigkeit über die Verbindungsleitung 10 dem Tank 28 rückgeführt. Durch die Drosselwirkung des Stromregelventils, insbesondere bei gewünschten langsamen Drehzahlen des Antriebsmotors entsteht eine zusätzliche Erwärmung der hydraulischen Flüssigkeit ,welche eine wirkungsvolle Kühleinrichtung notwendig macht. Der geregelte Ölstrom kann dann den Hydromotor 4 antreiben. Die hydraulische Flüssigkeit kann dann über die nur mit geringem Druck beaufschlagte Rücklaufleitung 11a dem Wärmetauscher 19, der hier in der Rücklaufleitung 11 eingebaut ist, zugeführt werden. In dieser Ausführungsform wird auch die hydraulische Flüssigkeit, die über das Stromregelventil 9 der Verbindungsleitung 10 zugeführt wurde, dem Wärmetauscher 19 zugeführt. Der Wärmetauscher 19 gibt Wärmeenergie der zu kühlenden hydraulischen Flüssigkeit an den Erntegutstrom der Erntemaschine ab. Die gekühlte hydraulische Flüssigkeit kann dann über die Leitung 11b in den Tank 28 rückgeleitet werden. Das Sperrventil 12 ist in einer Verbindungsleitung zwischen Druckleitung 8 und druckarmer Rückleitung 11 vorgesehen. Wie zuvor beschrieben, kann durch Öffnen des Sperrventils 12 der Strom der hydraulischen Flüssigkeit kurzgeschlossen werden, wodurch der Hydromotor 4 nicht mehr angetrieben wird.

In Fig. 5 ist der Wärmetauscher 19 in Strömungsrichtung nach der Verbindungsleitung 10 vorgesehen. Der Wärmetauscher könnte jedoch auch in den Rückleitungsabschnitt 11 a vor der Leitung 10 vorgesehen sein.

Bei den vorherigen Ausführungsbeispielen wurde der Wärmetauscher 19 vorteilhafterweise in die druckarme Rückleitung 11 eingebaut. Es ist jedoch auch möglich, den Wärmetauscher an einer anderen Stelle des Hydraulikkreislaufs einzufügen. Die Anordnung in der druckarmen Rückleitung ist jedoch besonders vorteilhaft. Es wäre auch möglich, vom Tank 28 gesonderte Leitungen zu dem Wärmetauscher 19 hin- und rückzuführen, um hydraulische Flüssigkeit im Tank 28 durch Abgabe der Wärmeenergie an den Erntestrom zu kühlen.

## Patentansprüche

1. Kühlsystem für einen hydraulischen Antrieb (4) in einer landwirtschaftlichen Emtemaschine (2), mit einem Wärmetauscher (19) zur Kühlung einer hydraulischen Flüssigkeit,
**dadurch gekennzeichnet,**
**dass** der Wärmetauscher (19) Wärmeenergie der zu kühlenden hydraulischen Flüssigkeit an einen Erntegutstrom der Erntemaschine (2) abgibt.

2. Kühlsystem nach Anspruch 1,
**dadurch gekennzeichnet,**
**dass** der Wärmetauscher (19) mindestens ein Bauteil (14, 18) der Erntemaschine (2) umfasst, das mit dem Erntegutstrom in Berührung kommt.

3. Kühlsystem nach mindestens Anspruch 2,
**dadurch gekennzeichnet,**
**dass** der Wärmetauscher mindestens eine der einen Förderkanal (20) für den Emtegutstrom bildenden Wände (14, 18) umfasst, die zumindest teilweise als Hohlkörper (21) ausgebildet ist und durch die zu kühlende hydraulische Flüssigkeit fließt.

4. Kühlsystem nach Anspruch 1 oder 2,
**dadurch gekennzeichnet,**
**dass** der Wärmetauscher Kühlrohre (17) umfasst, durch die die zu kühlende hydraulische Flüssigkeit fließt, und die an mindestens einer der einen Förderkanal (20) für den Erntegutstrom bildenden Wände (14, 18) wärmeleitend befestigt ist.

5. Kühlsystem nach mindestens einem der Ansprüche 1 bis 4,
**dadurch gekennzeichnet,**
**dass** der Wärmetauscher (19) in eine nur mit geringem Druck beaufschlagte Rücklaufleitung (11) eines Hydraulikkreislaufs des hydraulischen Antriebs (4) eingeschaltet ist.

6. Kühlsystem nach mindestens einem der Ansprüche 1 bis 5,
**dadurch gekennzeichnet,**
**dass** der Wärmetauscher (19) eine Rückwand (14) einer Querfördereinrichtung (3) umfasst.

7. Kühlsystem nach mindestens einem der Ansprüche 1 bis 6,
**dadurch gekennzeichnet,**
**dass** der Wärmetauscher (19) eine Auswurfhaube (18) eines Aufbereiters (15) umfasst.

8. Erntemaschine (2) mit einem hydraulischen Antrieb (4) und einem Kühlsystem für den hydraulischen Antrieb (4) nach mindestens einem der Ansprüche 1 bis 7.

## Claims

1. Cooling system for a hydraulic transmission (4) in an agricultural harvester (2), with a heat exchanger (19) for cooling a hydraulic fluid,
**characterised in that**
the heat exchanger (19) transmits heat energy from the hydraulic fluid to be cooled to a flow of crop harvested by the harvester (2).

2. Cooling system as claimed in claim 1,
**characterised in that**
the heat exchanger (19) comprises at least one component (14, 18) of the harvester (2) which comes into contact with the flow of harvested crop.

3. Cooling system as claimed in at least claim 2,
**characterised in that**
the heat exchanger comprises at least one of the walls (14, 18) forming a conveyor passage (20) for the flow of harvested crop, at least a part of which is designed as a hollow body (21) and through which the hydraulic fluid to be cooled flows.

4. Cooling system as claimed in claim 1 or 2,
**characterised in that**
the heat exchanger has cooling tubes (17) through which the hydraulic fluid to be cooled flows and which are secured to at least one of the walls (14, 18) forming a conveyor passage (20) for the harvested crop so as to conduct heat.

5. Cooling system as claimed in at least one of claims 1 to 4,
**characterised in that**
the heat exchanger (19) is integrated in a return line (11) of a hydraulic circuit of the hydraulic transmission (4) to which only low pressure is applied.

6. Cooling system as claimed in at least one of claims 1 to 5,
**characterised in that**
the heat exchanger (19) comprises a rear wall (14) of a transverse conveyor system (3).

7. Cooling system as claimed in at least one of claims 1 to 6,
**characterised in that**
the heat exchanger (19) comprises an ejector hood (18) of a conditioner (15).

8. Harvester (2) with a hydraulic transmission (4) and a cooling system for the hydraulic transmission (4) as claimed in at least one of claims 1 to 7.

## Revendications

1. Système de refroidissement pour une transmission hydraulique (4) sur une machine à récolter agricole (2), avec un échangeur de chaleur (19) pour le refroidissement d'un liquide hydraulique,
**caractérisé en ce que** l'échangeur de chaleur (19) délivre de l'énergie thermique du liquide hydraulique à refroidir à un flux de récolte de la machine à récolter (2).

2. Système de refroidissement selon la revendication 1,
**caractérisé en ce que** l'échangeur de chaleur (19) comprend au moins un composant (14, 18) de la machine à récolter (2) entrant en contact avec le flux de récolte.

3. Système de refroidissement selon au moins la revendication 2,
**caractérisé en ce que** l'échangeur de chaleur comprend au moins une des parois (14, 18) formant un canal de transport (20) pour le flux de récolte, laquelle est réalisée au moins partiellement comme corps creux (21), et par laquelle s'écoule le liquide hydraulique à refroidir.

4. Système de refroidissement selon la revendication 1 ou la revendication 2,
**caractérisé en ce que** l'échangeur de chaleur comprend des tuyaux de refroidissement (17) par lesquels s'écoule le liquide hydraulique à refroidir, et qui sont fixés pour conduction thermique sur au moins une des parois (14, 18) formant un canal de transport (20) pour le flux de récolte.

5. Système de refroidissement selon au moins l'une des revendications 1 à 4,
**caractérisé en ce que** l'échangeur de chaleur (19) est mis en marche dans une conduite de retour (11) d'un circuit hydraulique de la transmission hydraulique (4), laquelle n'est soumise qu'à une faible pression.

6. Système de refroidissement selon au moins l'une des revendications 1 à 5,
**caractérisé en ce que** l'échangeur de chaleur (19) comprend une paroi arrière (14) d'un dispositif de transport transversal (3).

7. Système de refroidissement selon au moins l'une des revendications 1 à 6,
**caractérisé en ce que** l'échangeur de chaleur (19) comprend une hotte d'éjection (18) d'une trieuse (15).

8. Machine à récolter (2) avec une transmission hydraulique (4) et un système de refroidissement pour la transmission hydraulique (4) selon au moins l'une des revendications 1 à 7.
